(19) Europäisches Patentamt
European Patent Office
Office européen des brevets

(11) **EP 4 617 710 A1**

(12) **EUROPEAN PATENT APPLICATION**

(43) Date of publication:
**17.09.2025 Bulletin 2025/38**

(51) International Patent Classification (IPC):
**G01S 7/35** (2006.01)    **G01S 13/32** (2006.01)
**G01S 13/58** (2006.01)    **G01S 13/931** (2020.01)
**G01S 13/44** (2006.01)

(21) Application number: **25158720.0**

(22) Date of filing: **19.02.2025**

(52) Cooperative Patent Classification (CPC):
**G01S 7/354; G01S 13/325; G01S 13/584;**
**G01S 13/931;** G01S 13/44

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.03.2024 US 202418606525**

(71) Applicant: **NXP B.V.**
**5656 AG Eindhoven (NL)**

(72) Inventors:
• **Overdevest, Jeroen**
  **5656AG Eindhoven (NL)**
• **JI, Jiaqi**
  **5656AG Eindhoven (NL)**
• **Koppelaar, Arie Geert Cornelis**
  **5656AG Eindhoven (NL)**
• **Pandharipande, Ashish**
  **5656AG Eindhoven (NL)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire S051 9NJ (GB)**

(54) **SPARSE RANGE PROCESSING FOR VEHICLE RADAR SYSTEM**

(57)    A radar system includes transmitter modules configured to transmit radar signals and receiver modules. A controller is configured to encode a plurality of code division multiplexed radar, cause the plurality of transmitter modules to transmit the plurality of code division multiplexed radar signals as transmitted signals, receive reflections of the transmitted signals reflected by at least one object to generate signals based on the received reflections as observed signals, wherein a sparse matrix defines a relationship between the plurality of transmitter codes and values of the observed signals, execute a sparse recovery method to determine the sparse matrix, which is associated with distance estimates based on the observed signals, using the predefined code dictionary and the observed signals, estimating an attribute of the at least one object using the sparse matrix, and transmitting the attribute of the at least one object to a vehicle driver assistance system.

FIG. 2

**Description**

TECHNICAL FIELD

The present disclosure is directed in general to radar systems and associated methods of operation. In one aspect, the present disclosure relates to a multiple-input, multiple-output (MIMO) radar system, such as a civil automotive radar system, configured as a code division multiple access (CDMA) radar system with improved correlator operation.

BACKGROUND

A radar system, such as a civil automotive radar system, transmits an electromagnetic signal and receives back reflections of the transmitted signal. The time delay and/or time delay variation between the transmitted and received signals can be determined and used to calculate the distance and/or the speed of objects, such as cars, trucks, motorcycles, traffic signs, roadway fixtures, and the like, causing the reflections, respectively. For example, in civil automotive applications, civil automotive radar systems can be used to determine the distance and/or the speed of oncoming vehicles and other obstacles.

Civil automotive radar systems enable the implementation of advanced driver-assistance system (ADAS) functions that are likely to enable increasingly safe driving and, eventually, fully autonomous driving platforms. Such systems use radar systems as the primary sensor for ADAS operations.

In a code division multiple access (CDMA) multiple-input multiple-output (MIMO) radar system, multiple signal transmitters transmit radar signals encoded with unique codes. Reflections of those signals are processed via banks of correlators to detect delays and Doppler shifts in the reflected signals, which can be analyzed to determine attributes such as distance and velocity of objects in the vicinity of the radar system.

BRIEF DESCRIPTION OF THE DRAWINGS

A more complete understanding of the subject matter may be derived by referring to the detailed description and claims when considered in conjunction with the following figures, wherein like reference numbers refer to similar elements throughout the figures.

FIG. 1 is a block diagram depicting an example phase-modulated continuous wave (PMCW) CDMA MIMO radar system, which may implement a transmitter coding and decoding scheme and a conventional Doppler filtering process, further discussed below.

FIG. 2 is a block diagram depicting a PMCW CDMA MIMO radar system configured to implement the present sparse recovery approach for radar signal processing.

FIG. 3 is a block diagram depicting a PMCW CDMA MIMO radar system configured to implement the present sparse recovery approach for radar signal processing including an alternative signal processing sequence.

FIG. 4 is a block diagram depicting a PMCW CDMA MIMO radar system configured to implement the present sparse recovery approach for radar signal processing including an alternative signal processing sequence.

FIGS. 5 and 6 are charts depicting results of PMCW distance estimation in accordance with conventional approaches and in accordance with the present disclosure.

DETAILED DESCRIPTION

The following detailed description is merely illustrative in nature and is not intended to limit the embodiments of the subject matter of the application and uses of such embodiments. As used herein, the words "exemplary" and "example" mean "serving as an example, instance, or illustration." Any implementation or embodiment described herein as exemplary, or an example is not necessarily to be construed as preferred or advantageous over other implementations. Furthermore, there is no intention to be bound by any expressed or implied theory presented in the preceding technical field, background, or the following detailed description.

Automotive radar systems are used to support advanced driver-assistance system (ADAS) functions like assisted cruise control, emergency braking, blind spot monitoring, and alerts. Various embodiments described herein relate to Multiple-Input Multiple-Output (MIMO) radar systems with integrated object or obstacle tracking capabilities including a capability of determining direction of arrival (DOA) of detected objects.

In one or more embodiments, an example radar system as may be used in a civil automotive application and includes a microcontroller unit (MCU) having a signal processor configured to determine attributes of objects in the vicinity of the radar system by processing, for example, using raw analog-to-digital (ADC) samples derived from return signals (i.e., reflections) corresponding to reflections of transmit signals (e.g., incorporating codewords) transmitted via transmitter (TX) antenna elements of the radar system, where the return signals are received via receiver (RX) antenna elements of the radar system.

Frequency-Modulated Continuous Wave (FMCW) radar signal encoding is often used in automotive radar applications due to the encoding scheme's efficient design for radar system front-end circuits. To the extent other digital signal encodings are used for transmitted radar signals, other waveform encodings (e.g., Phase-Modulated Continuous Wave (PMCW), Orthogonal Frequency Domain Multiplexing (OFDM), and Orthogonal Time-Frequency Space (OFTS) encoding) have been introduced as possible alternatives to existing FMCW-encoded waveforms. In contrast to FMCW radar systems, it is generally preferred that digital waveform variants (e.g., such as those utilized in PMCW radar systems) provide adequate flexibility (e.g. variations in the signal codewords themselves, the signal's length, the time duration of each chip/bit (inversely proportional to the RF bandwidth), etc. ) in the system's transmitted signal while supporting continuous signal transmissions.

PMCW waveforms, for example, have historically been limited in their application of automotive radars due to high dynamic range requirements, as well as the scheme's intolerance to Doppler frequency shifts. Different code sequence families have been designed in the past and are all bounded by the infamous Welch Bound. The code family refers to a set of codes that have similar (auto- and cross-) correlation properties. If the codes in the code family do not have good autocorrelation and/or cross-correlation properties, then the radar system can be limited in performing distance estimation. This can also result in object masking in the distance dimension, which can mean that if there is a strong object at a close distance a weaker, further away objects might be hidden (non-detectable) in the sidelobes of the strong object at close distance. Therefore, it can be preferable to provide code families that enable a high dynamic range in distance. However, then we are limited by mathematical bounds, as these "perfect codes" do not exist - and its correlation properties are bounded by the Welch bound.

In this disclosure, a correlator is proposed that provides a different approach for range processing, exploiting signal sparsity. In particular, the present disclose provides a radar system using code division multiple access (CDMA) signal encoding (e.g., PMCW radar) employing signals correlators configured to use the least absolute shrinkage and selection operator (LASSO) optimization formulation as a mechanism for detecting time shift in reflected radar system signals. In this configuration, the present correlator design can utilize several solvers, such as, (Fast) Iterative Shrinkage Thresholding Algorithm (ISTA), Approximate Message Passing (AMP), Alternating Direction Method of Multipliers (ADMM), etc. Additionally, as contemplated herein, deep-learning variants of the present correlator can be utilized to boost convergence and enable robustness to perturbations in the received signals.

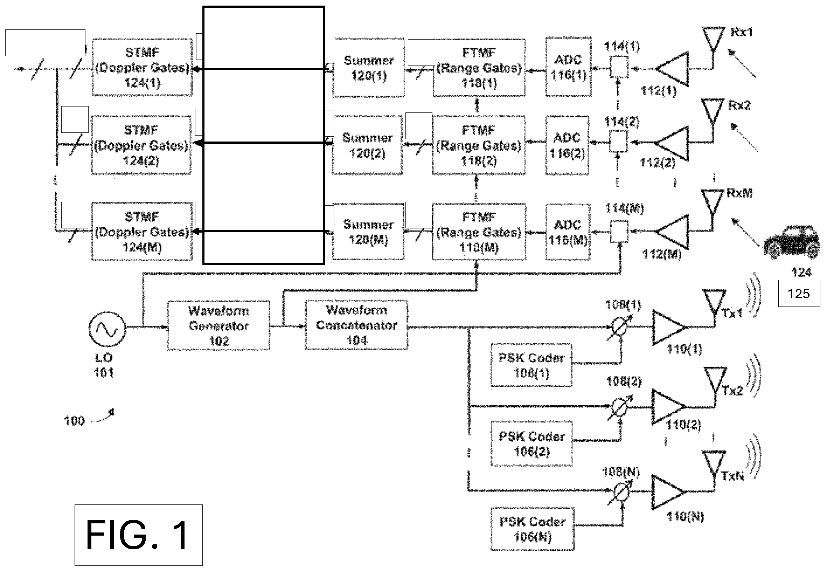

An example PMCW CDMA MIMO radar system 100 is shown in FIG. 1, which may implement a transmitter coding and decoding scheme and a conventional Doppler filtering process, further discussed below. Radar system 100 includes a local oscillator (LO) 101, a waveform generator 102, a waveform concatenator 104, phase shift keying (PSK) coders 106(1)-(N), mixers 108(1)-(N), power amplifiers 110(1)-(N), and transmit antennas Tx1-TxN that implement an N number of transmitters (or transmitter channels). Radar system 100 also includes receive antennas Rx1-RxM, low noise amplifiers (LNA) 112(1)-(M), mixer blocks 114(1)-(M), analog-to-digital converters (ADC) 116(1)-(M), fast time matched filters (FTMF) 118(1)-(M), summer blocks 120(1)-(M), and slow time matched filters (STMF) 124(1)-(M) that implement an M number of receivers (or receiver channels). These components are further discussed in detail below. Radar system 100 may also be referred to as a transceiver 100 including N transmitters and M receivers. During operation, the N transmitters drive encoded output signals on transmit antennas Tx1-TxN, which reflect off an object in the range of radar system 100, such as vehicle 125, and echo or reflection signals are received on receive antennas Rx1-RxM. Since the echo signals are delayed in time as compared with the transmitter output signals, the radar system 100 generates signals indicating the relationships between the echo signals and the transmitter output signals, which may be processed by a functional evaluation circuit and provided to digital signal processing to determine information about the object.

The transmitter coding process generates (e.g., via waveform generator 102) transmitter output signals according to codes determined by a predefined code dictionary. In an embodiment, each of the transmitters is assigned a respective transmitter code at a particular time, with a total of transmitter codes in the code set. Each transmitter transmits their respective coded sequence at the same time for a repeated number of times for facilitating Doppler estimation. The repeated coded sequences form the transmitter output signal.

The interval of the repeated transmission of each coded sequence is the pulse repetition interval (PRI), which is understood herein as the "transmitter waveform block repetition interval". The repeated unit waveforms allow range measurements to be produced over the multiple PRIs. Due to the relative movement between the radar and the object, the stability of the local oscillator, and the stationarity of the propagation channel, there exists a finite time during which an object's echo signal can be extracted coherently from a range-Doppler gate detection cell and an unambiguous determination of the object's range and Doppler speed can be made. The maximum time an echo signal of the object can be coherently processed within a detection cell is referred to as the coherent processing interval (CPI) , or dwell time in short.

Generally, during the CPI, each receiver receives echo signals of the transmitters' transmitted waveform blocks and processes the echo signal for information extraction. Each receiver includes FTMF 118, which implements range gates that each include code filters for sorting the echo signals received by a given receiver into range bins according to time of arrival relative to the transmitted transmitted waveform blocks, where the different range bins correspond to different ranges in which the object may be located.

Each receiver also includes summer blocks 120 that sums up the outputs for each range gate, resulting in range gate outputs. Radar system may include a number of decoders in the signal chain between summer blocks and STMFs 124. In that case, the decoders could include sets of correlators, where each of the range gate outputs are provided to a respective set of correlators. Each of the correlators is associated with a respective transmitter code of the code set, and the echo signal is cross-correlated with each of the transmitter codes. Each of the correlators outputs a correlation signal that has a peak when the echo signal was (most likely) encoded with a transmitter code that matches the correlator's associated transmitter code. As a result, the echo signal with matching transmitter code is decoded, and other signals (such as noise signals or signals encoded with a different transmitter code) are suppressed. Each receiver further includes STMF 124, which implements a number of Doppler gates that sorts the decoded echo signals into a number of Doppler bins according to Doppler frequency shift or offset relative to the transmitted transmitted waveform blocks, where the different Doppler bins correspond to different Doppler speeds at which the object may be traveling. The number of Doppler bins achievable by the radar system can depend on the number of PRIs completed during the CPI as well as on the FFT size used by the Doppler processing.

PMCW radar signal encoding schemes may provide more flexibility in transmitted signals than other encoding schemes. Although historically challenging to implement, technological advances have enabled higher and more stable processor clock speeds, which can directly improve the bandwidth and range resolution of PMCW radars, thus making PMCW radars a promising alternative for automotive radar applications. However, the application of PMCW radars is limited by its high demands in dynamic range and also the scheme's intolerance to Doppler frequency shifts. Furthermore, civil automotive radar applications should be able to detect both large objects and small objects simultaneously. As a consequence, sidelobe levels in a determined range profile become an important factor to the success of object detection. That is, high sidelobe levels can obscure objects with weak reflections, thus limiting the dynamic range of the radar system. Consequently, it is desirable, for PMCW systems, to adequately manage sidelobe levels so that the system's precision in range estimation and object detection can be maintained and improved.

Multiple-Input Multiple-Output (MIMO) radar is used in many Frequency-Modulated Continuous Wave (FMCW) automotive radar sensors for its higher spatial resolution and lower device costs than other solutions. In MIMO radar systems, MIMO signal components need to be extracted and separated out of received radar reflection signals correctly before further processing and object detection and DOA estimation. In MIMO PMCW radar, however, different techniques can be used to separate the transmitted signals from each receiver antenna, including Time-Staggered Division Multiplexing (TDMA) or Code-division multiplexing (CDMA). In one such approach, and that of the present disclosure CDMA as MIMO is utilized.

In CDMA MIMO radar systems, each transmitter (e.g., transmitters TxN of FIG. 1) sends a signal encoded using a unique code. Orthogonality between the transmitted codes is desired to separate the channels of MIMO through range compression, as described above. Therefore, it is important that the codewords have good periodic correlation properties, both in terms of Periodic Auto-Correlation Function (PACF) and Periodic Cross-Correlation Function (PCCF).

In typical applications, however, it is not generally possible for a sequence set S to contain sequences of code values that meet all the conditions above simultaneously. Therefore, there are sidelobes in the output of the radar system's matched filters, limiting the dynamic range of object detection. Although several code families have been developed to achieve good correlation properties under certain circumstances (e.g., Almost Perfect Autocorrelation Sequences (APAS), Gold sequences and Zero Correlation Zone (ZCZ) sequences), such sequences only have ideal correlation properties over a limited range. For example, while APAS codes have almost ideal PACF behavior over the entire period and have PCCF behavior which has generally no difference from that of random sequences, which can be problematic.

In this disclosure, therefore, an improved correlator is provided that replaces conventional matched filter-based correlators with a correlator configured to operate with a sparse prior on the expected distance estimates. Specifically, in an embodiment of this invention disclosure, a correlation function is provided by an iterative or unrolled method configured to solve the formulated LASSO optimization problem using the $\ell 1$- norm as regularizer. As such, the present approach to correlation exploits the inherent sparsity attribute of the signal in the range or Doppler domain. In short, the present approach replaces a classical circular correlator with a, potentially learned, correlator that shows significant dynamic range performance improvement, while being independent of the transmitted sequence.

In describing the present approach for PMCW radar, an example PMCW radar system includes 1 transmit (Tx) antenna and 1 receive (Rx) antenna, where the Tx antenna excites a code sequence c of length $L_c$ symbols on a carrier frequency $f_c$. The transmit sequence can be real-valued or complex. Usually, the transmit sequence is transmitted multiple times to exploit periodic correlation properties of the code sequence. Having transmitted radar signals in this manner, upon receiving signals in response, after the gain stages and complex demodulation, the PMCW radar system's analog-to-digital converter (ADC) digitizes the received analog input signal (e.g., received via the Rx antenna), resulting into raw data

$\mathbf{y} \in \mathbb{C}^{L_c \times 1}$. The received signal y of a single transmission c contains K delayed versions, each reflected from an object, of the transmitted codeword, where $\tau_k$ denotes the round-trip delay of the k-th object. This can be mathematically presented by the following equation that summarizes the signal model for this approach:

$$y = \sum_{k=1}^{K} \beta_k c(t - \tau_k) + n = Cx + n \tag{1}$$

In equation (1), $\mathbf{x} = [\beta_1 \quad 0 \quad 0 \quad \beta_2 \quad ... \quad 0] \in \mathbb{C}^{L_c \times 1}$ is a K-sparse vector containing the complex object phasor of the k-th obj ect $\beta_k = A_k e^{j\phi k}$ with $A_k$ and $\phi_k$ being the amplitude and phase, respectively. Sparse in this context means that $K << L_c$. $\mathbf{C} \in \mathbb{C}^{L_c \times L_c}$ is a circulant matrix, whose columns are defined such that the k-th column is a (k - 1)-lag circular shift of c, as follows:

$$\mathbf{C} = \begin{bmatrix} c[0] & c[L_c - 1] & c[L_c - 2] & ... & c[1] \\ c[1] & c[0] & c[L_c - 1] & ... & c[2] \\ c[2] & c[1] & c[0] & ... & c[3] \\ \vdots & \vdots & \vdots & \ddots & \vdots \\ c[L_c - 1] & c[L_c - 2] & c[L_c - 3] & ... & c[0] \end{bmatrix} \tag{2}$$

In an expansion of the single transmitter/receiver system described above, in a MIMO PMCW radar configured to utilize CDMA, $N_T$ transmitters simultaneously transmit unique sequences. Assuming $N_R$ Rx antennas, the received signals can now be ordered in matrix-form $\mathbf{Y} = [Y_1, Y_2, ..., Y_{N_R}]$, which is similar to Equation (1) above, written as a superposition of time-delayed versions from all Tx antennas:

$$\mathbf{Y} = \mathbf{CX} + \mathbf{N}, \tag{3}$$

In equation (3), $\{\mathbf{Y}, \mathbf{N}\} \in \mathbb{C}^{L_c \times N_r}$ and the predefined dictionary matrix C is now constructed by staggering circulant matrices $\mathbf{C}_i$ for each transmitted code word $c_i$, where i refers to the i-th Tx antenna:

$$C = [C_1, C_2, ..., C_{N_T}] \tag{4}$$

In equation (4), C is of size $L_c \times N_T L_c$. Meanwhile, the sparse matrix $\mathbf{X} \in \mathbb{C}^{N_t L_c \times N_r}$ can be expressed as:

$$\mathbf{X} = \begin{bmatrix} \mathbf{x}_{1,1} & \mathbf{x}_{1,2} & ... & \mathbf{x}_{1,N_R} \\ \mathbf{x}_{2,1} & \mathbf{x}_{2,2} & ... & \mathbf{x}_{2,N_R} \\ \mathbf{x}_{3,1} & \mathbf{x}_{3,2} & ... & \mathbf{x}_{3,N_R} \\ \vdots & \vdots & \ddots & \vdots \\ \mathbf{x}_{N_T,1} & \mathbf{x}_{N_T,2} & ... & \mathbf{x}_{N_T,N_R} \end{bmatrix} \tag{5}$$

In equation (5), each vector $\mathbf{x}_{i,j}$, with j indicating the j-th receive antenna, is again K-sparse and can be expressed as $\mathbf{x}_{i,j} = [\beta_1 a_i(\theta_{1,t}) b_j(\theta_{1,r}) \ 0 \ 0 \ \beta_k a_i(\theta_{k,t}) b_j(\theta_{k,r}) ... 0]^T$, where $a(\theta_{k,t})$ and $b(\theta_{k,r})$ denote the Tx and Rx antenna steering vectors, respectively. Furthermore, the Direction of Arrival (DoA) and Direct of Departure (DoD) angles are denoted by $\theta_{k,t}$ and $\theta_{k,r}$, respectively.

Typically, in PMCW radar systems, distances to objects are calculated using range compression by applying a matched filter to received signals to find the returned and delayed codes in the received signal. For a transmitted code $c_i$, for example, a corresponding cyclic correlator $C_i$ shown in (2) can be used to implement a matched filter according to the following equation:

$$x_{MF_{i,j}} = C_i^H y \tag{6}$$

In equation (6), $x_{MF_{i,j}} \in \mathbb{C}^{L_c \times 1}$ is the circular correlation output for the (i,j)-th Tx/Rx pair.

Sparse recovery can be used for processing civil automotive radar signals in which object signals in the distance dimension of received signals are generally highly sparse. To exploit this property in the object signal distribution, distance estimation can be formulated as a sparse recovery problem along the fast-time axis. For a single-input single-output (SISO) radar system, therefore, the recovery of **x** from the observation y see equation (1), above, using the dictionary matrix C from (2) can be formulated as a LASSO optimization problem with regularization of the $\ell_1$-norm. Similarly, for MIMO radar applications, the recovery of **X** from the observation Y see equation (3), above, using the dictionary matrix C from (4) can also be formulated as a LASSO optimization problem, as follows:

$$\hat{\mathbf{x}}_{LASSO} = \arg\min_{X} \frac{1}{2}||\mathbf{y} - \mathbf{Cx}||_2^2 + \lambda \parallel \mathbf{x} \parallel_1 \tag{7}$$

$$\hat{\mathbf{X}}_{LASSO} = \arg\min_{X} \frac{1}{2}||\mathbf{Y} - \mathbf{CX}||_2^2 + \lambda \sum_i^{N_t} \sum_j^{N_r} \parallel \mathbf{x}_{i,j} \parallel_1 \tag{8}$$

In equations (7) and (8), the $\ell_1$-norm of $\mathbf{x}_{i,j}$ is used as regularization to enforce sparsity and remain convex. Additionally, $\lambda$ is a scalar that trades off between data consistency and sparsity of the expected range domain signal. Then, different iterative solvers can be applied to this problem, both learned and analytical versions, e.g. Iterative Shrinkage and Thresholding Algorithm (ISTA) and Alternating Direction Method of Multipliers (ADMM).

For example, one of the solvers for solving sparse estimation problems is the Iterative Shrinkage Thresholding Algorithm (ISTA) which uses the following update rule:

$$\begin{aligned} X^{(k+1)} &= prox_{\lambda||\cdot||_1}(X^{(k)} - \mu C^H(CX^{(k)} - Y)) \\ &= \text{prox}_{\lambda||\cdot||_1}((I - \mu C^H C)X^{(k)} + \mu C^H Y)) \end{aligned} \tag{9}$$

In equation (9), $\mu$ is the step size, $\lambda$ is the regularization coefficient, and the proximal step $\text{prox}_{\lambda||\cdot||_1}(\cdot)$ is a soft-thresholding function. For initialization, $\mathbf{X}_0 = \mathbf{0}$. The soft thresholding function is given by:

$$\text{prox}_{\lambda||\cdot||_1}(\cdot) = \exp(j\angle\mathbf{X}) \cdot \max(|\mathbf{X}| - \lambda, 0) \tag{10}$$

In various embodiments, Fast-ISTA (FISTA) may be utilized in this approach. In that case, FISTA is a refined version of the original ISTA, whose main improvement is introducing the momentum term $t_k$ into each iteration, which contributes to a faster convergence speed. The updated rule of FISTA can thus be expressed as:

$$X_k^{\square} = \text{prox}_{\lambda||\cdot||_1}(Z_k - \mu C^H(CZ_k^{\square} - Y))$$

$$t_{k+1} = \frac{1 + \sqrt{1 + 4t_k^2}}{2} \tag{11}$$

$$Z_{k+1} = X_k + \frac{t_k - 1}{t_{k+1}}(X_k - X_{k-1})$$

In equation (11), for initialization $\mathbf{Z}_1 = \mathbf{X}_0 = 0$ and $t_0 = 1$ can be used.

In other embodiments, ADMM can be utilized, with the following updating rule:

$$X_{k+1}^{\square} = (C^H C + \gamma I)^{-1}(CY + \rho(\alpha_k^{\square} - \omega_k^{\square}))$$

$$\alpha_{k+1}^{\square} = \text{prox}_{\lambda||\cdot||_1}(X_{k+1}^{\square} + \omega_k^{\square})$$

$$\omega_{k+1}^{\square} = \omega_k^{\square} + X_{k+1}^{\square} - \alpha_{k+1}^{\square} \tag{12}$$

In equation (12), $\varpi_0 = \alpha_0 = 0$ may be used for initialization. In this case, the value of $\rho$ greatly influences the convergence behavior of ADMM. To reduce computational overhead, the value $(\mathbf{C}^H\mathbf{C} + \gamma\mathbf{I})^{-1}$ may be precomputed for a fixed $y = 1/2$.

To improve the convergence speed while reducing inherent sidelobes of the transmitted codewords more effectively, it is possible to unroll the iterative algorithms and to learn the parameters that are used in the subsequent layers. Here, for example, learned unfolding of FISTA and ADMM may be utilized and will be referred to, going forward, as analytically learned FISTA (AL-FISTA) and ADMM (AL-ADMM). Learning the dictionary $\mathbf{C}$ for every layer is not expect to increase performance and therefore the dictionary can be kept fixed along the layers. Through backpropagation, in AL-FISTA the parameters $\mu_k$, $\lambda_k$, and $t_k$ can be trained for every $k$-th layer, while $\rho_k$ and $\lambda_k$ are trained in AL-ADMM.

These approaches are now applied to a simulation in which two different coding schemes were considered: random codes with $L_c = 1024$ and Gold codes with $L_c = 1023$. Both of these are binary code sequences with values in $\{-1,1\}$.

Quantitatively, in compressed sensing, the coherency of dictionary matrices can be important to the performance of the reconstruction. In general, lower coherency in a dictionary matrix usually indicates better performance of reconstruction. The mutual coherency of a matrix can be calculated by the following equation:

$$\mu(\mathbf{C}) = \max_{1 \le i,j \le N_T L_c, i \ne j} \frac{\overline{c}_i^H \overline{c}_j}{\| \overline{c}_i \| \| \overline{c}_j \|} \qquad (13)$$

The codes can be selected such that the coherency of dictionary matrices (e.g., generated using equation (13)) low.

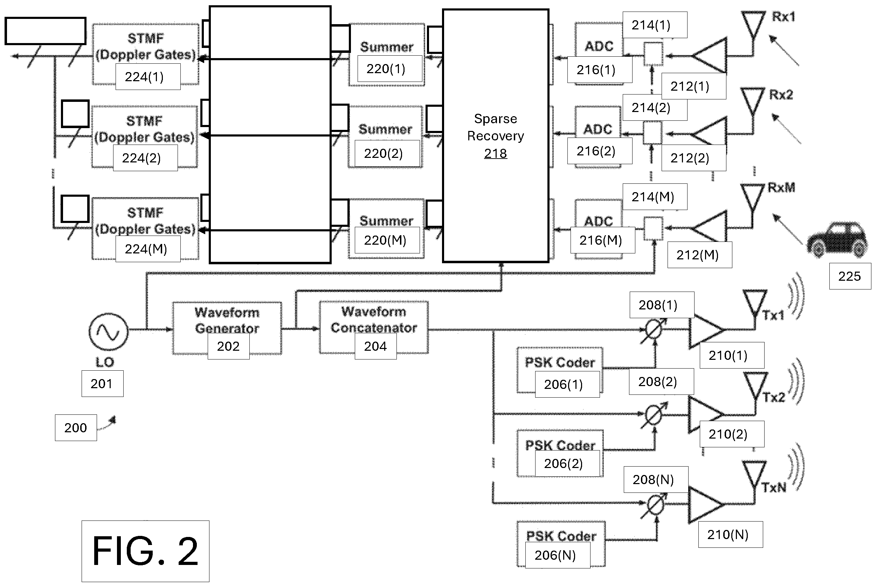

FIG. 2 is a block diagram depicting PMCW CDMA MIMO radar system 200 configured to implement the present sparse recovery approach for radar signal processing. Radar system 200 includes a local oscillator (LO) 201, a waveform generator 202, a waveform concatenator 204, phase shift keying (PSK) coders 206(1)-(N), mixers 208(1)-(N), power amplifiers 210(1)-(N), and transmit antennas Tx1-TxN that implement an N number of transmitters (or transmitter channels). Radar system 200 also includes receive antennas Rx1-RxM, low noise amplifiers (LNA) 212(1)-(M), mixer blocks 214(1)-(M), analog-to-digital converters (ADC) 216(1)-(M), sparse recovery block 218, summer blocks 220(1)-(M), and slow time matched filters (STMF) 224(1)-(M) that implement an M number of receivers (or receiver channels). These components are further discussed in detail below. Radar system 200 may also be referred to as a transceiver 200 including N transmitters and M receivers. During operation, the transmitters drive encoded output signals on transmit antennas Tx1-TxN, which reflect off an object in the range of radar system 200, such as vehicle 225, and echo or reflection signals are received on receive antennas Rx1-RxM. Since the echo signals are delayed in time as compared with the transmitter output signals, the radar system 200 generates signals indicating the relationships between the echo signals and the transmitter output signals, which may be processed by a functional evaluation circuit and provided to digital signal processing to determine information about the object. The transmitter coding process generates transmitter output signals according to codes determined by a code dictionary. In various embodiments, the code dictionary matrix $\mathbf{C}$ may be a circulant matrix, whose columns are defined such that the k-th column is a $(k - 1)$-lag circular shift of a code vector c configured, as set forth in equation (2), above. As discussed above, the use of such a code matrix in the form of a circulant matrix can provide certain efficiencies in signal processing (e.g., as described above with respect to equation (13)). In an embodiment, each of the transmitters is assigned a respective transmitter code as determined by the matrix $\mathbf{C}$ at a particular time, with a total of N transmitter codes in the code set. Each transmitter transmits their respective coded sequence at the same time for a repeated number of times for facilitating Doppler estimation. The repeated coded sequences form the transmitter output signal, which is also referred to as a transmitted waveform block.

Each receiver receives echo signals of the transmitted signals and processes the echo signals for information extraction. In general, the signals are processed by a signal processor (e.g., an MCU having signal processing capabilities) configured to implement sparse recovery 218 in accordance with the present disclosure. Sparse recovery 218 may be implemented by a processor or other radar signal processing module configured to receive input signals from the various receive Rx antennas of radar system 200 (and corresponding ADCs 216 and LNA 212) and process those signals, whether in analog or digital form, to extract information such as estimated DOAs of object generated the reflection signals received by radar system 200. Specifically, in the system embodiment depicted in FIG. 2, sparse recovery 218 is configured to receive the digitally encoded signals y generated by ADCs 116 and generate corresponding output signals x, by solving equation (1), above. This may involve executing the sparse recovery method in parallel on each of the values received from ADCs 216. The sparse matrices $\mathbf{x}$, are supplied as inputs to summer blocks 220 that sums up a number of slow-time outputs in the matrices x, which are supplied to Doppler gates 224, which implement a number of Doppler gates (e.g., via application of an FFT) that sorts the decoded echo signals into a number of Doppler bins according to Doppler frequency shift or offset relative to the transmitted signals, where the different Doppler bins correspond to different Doppler speeds associated with an object. The outputs of Doppler gates 224 are used for signal processing to determine the DOA, relative speed, and other attributes of objects in the vicinity of the radar system.

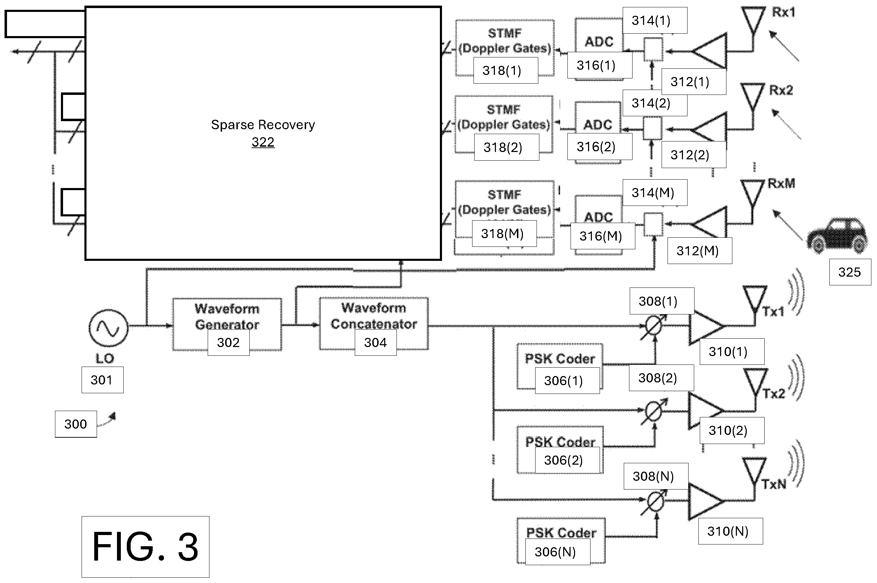

FIG. 3 is a block diagram depicting PMCW CDMA MIMO radar system 300 configured to implement the present sparse recovery approach for radar signal processing including a second signal processing sequence. Radar system 300 includes a local oscillator (LO) 301, a waveform generator 302, a waveform concatenator 304, phase shift keying (PSK) coders 306(1)-(N), mixers 308(1)-(N), power amplifiers 310(1)-(N), and transmit antennas Tx1-TxN that implement a number of transmitters (or transmitter channels). Radar system 300 also includes receive antennas Rx1-RxM, low noise amplifiers (LNA) 312(1)-(M), mixer blocks 314(1)-(M), analog-to-digital converters (ADC) 316(1)-(M), slow time matched filters (FTMF) Doppler gates 318(1)-(M), sparse recovery block 322, and decoders 324. These components are further discussed in detail below. Radar system 300 may also be referred to as a transceiver 300 including N transmitters and M receivers. During operation, the transmitters drive encoded output signals on transmit antennas Tx1-TxN, which reflect off an object in the range of radar system 300, such as vehicle 325, and echo or reflection signals are received on receive antennas Rx1-RxM. Since the echo signals are delayed in time as compared with the transmitter output signals, the radar system 300 generates signals indicating the relationships between the echo signals and the transmitter output signals, which may be processed by a functional evaluation circuit and provided to digital signal processing to determine information about the object. The transmitter coding process generates transmitter output signals according to a set of predetermined codes. In various embodiments, elements of the code dictionary matrix $\mathbf{C}$ may include circulant matrices, whose columns are defined such that the k-th column is a $(k-1)$-lag circular shift of a code vector $\mathbf{c}$ configured, as set forth in equation (2), above. As discussed above, the use of such a code matrix in the form of a circulant matrix can provide certain efficiencies in signal processing (e.g., as described above with respect to equation (13)).

In an embodiment, each of the transmitters is assigned a respective transmitter code as determined by the matrix $\mathbf{C}$ at a particular time, with a total of N transmitter codes in the code set. Each transmitter transmits their respective coded sequence at the same time for a repeated number of times for facilitating Doppler estimation.

Each receiver receives echo signals of the transmitted signals and processes the received echo signals for information extraction. In general, the signals are processed by a signal processor (e.g., an MCU having signal processing capabilities) configured to implement sparse recovery 322 in accordance with the present disclosure. Sparse recovery 322 may be implemented by a processor or other radar signal processing module configured to receive input signals from the various receive Rx antennas of radar system 300 (and corresponding ADCs 316 and LNAs 312) and process those signals, whether in analog or digital form, to extract information such as estimated DOAs of objects generating the reflection signals received by radar system 300.

In the system embodiment depicted in FIG. 3, STMF Doppler gates 318 are configured to execute slow-time Doppler processing (e.g., via application of an FFT) on the outputs of ADCs 316 to generate the set of vectors $\mathbf{Y}$. Sparse recovery 322 is configured to receive the output signals of STMF Doppler gates 318 $\mathbf{Y}$ and process those signals, according to the approaches described herein, to generate a set of sparse vectors $\mathbf{X}$, such as by solving equation (3) using the approaches described herein. The sparse matrix $\mathbf{X}$, once determined is supplied as an input to decoders 324, which are configured to implement sets of correlators, such as in the case an outer code has been used, where arrays from the sparse matrix $\mathbf{X}$ are provided to a respective set of correlators. Each of the correlators 324 outputs a correlation signal that has a peak when the echo signal was (most likely) encoded with a transmitter code that matches the correlator's associated transmitter code. As a result, the echo signal with matching transmitter code is decoded, and other signals (such as noise signals or signals encoded with a different transmitter code) are suppressed. The outputs of decoders 324 are processed to determine attributes of objects in the vicinity of the radar system.

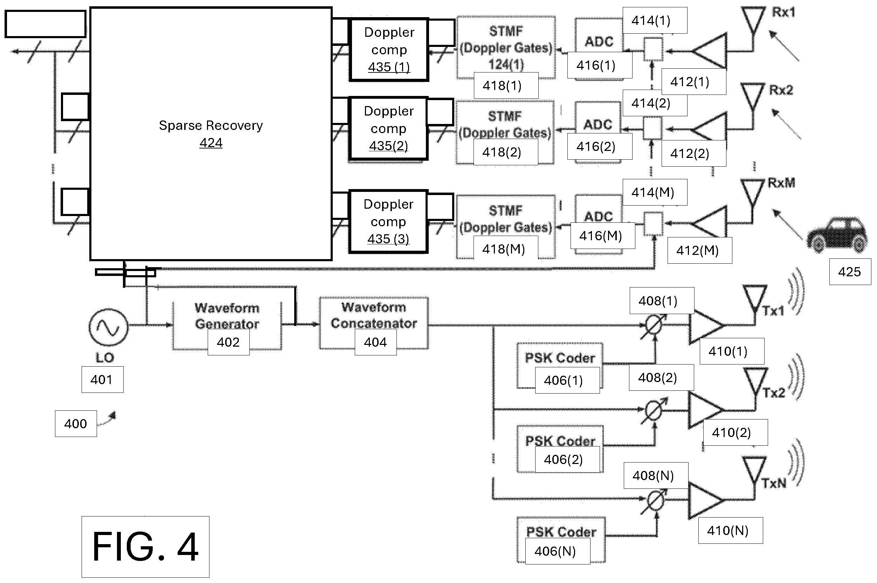

FIG. 4 is a block diagram depicting PMCW CDMA MIMO radar system 400 configured to implement the present sparse recovery approach for radar signal processing including an alternative signal processing sequence. Radar system 400 includes a local oscillator (LO) 401, a waveform generator 402, a waveform concatenator 404, phase shift keying (PSK) coders 406(1)-(N), mixers 408(1)-(N), power amplifiers 410(1)-(N), and transmit antennas Tx1-TxN that implement a number of transmitters (or transmitter channels). Radar system 400 also includes receive antennas Rx1-RxM, low noise amplifiers (LNA) 412(1)-(M), mixer blocks 414(1)-(M), analog-to-digital converters (ADC) 416(1)-(M), slow time matched filters (STMF) Doppler gates 418(1)-(M), Doppler compensation blocks 435, decoders 422 and sparse recovery block 424. These components are further discussed in detail below. Radar system 400 may also be referred to as a transceiver including N transmitters and M receivers. During operation, the transmitters drive encoded output signals on transmit antennas Tx1-TxN, which reflect off an object in the range of radar system 400, such as vehicle 425, and echo or reflection signals are received on receive antennas Rx1-RxM. Since the echo signals are delayed in time as compared with the transmitter output signals, the radar system 400 generates signals indicating the relationships between the echo signals and the transmitter output signals, which may be processed by a functional evaluation circuit and provided to digital signal processing to determine information about the object.

The transmitter coding process generates transmitter output signals according to codes selected for the active transmit antennas. Each receiver receives echo signals of the transmitted signals and processes the echo signal for information extraction. In general, the signals are processed by a signal processor (e.g., an MCU having signal processing capabilities) configured to implement sparse recovery 424 in accordance with the present disclosure. Sparse recovery 424 may be implemented by a processor or other radar signal processing module configured to receive input signals from the various receive Rx antennas of radar system 400 (and corresponding ADCs 416 and LNAs 412) and process those signals, whether in analog or digital form, to extract information such as estimated DOAs of objects generating the reflection signals received by radar system 400.

In the system embodiment depicted in FIG. 4, input signals for each receive antenna are processed by ADCs 416 into a set of digital analog values y. Those vectors are processed by SMTF Doppler gates 418 (e.g., via application of a slow-time FFT) and Doppler compensation blocks 435 to improve signal to noise ratio. While in many cases Doppler gates 418 and Doppler compensation may involve the use of FFTs, it should be understood that this is intended to be illustrative and not limiting. Other suitable techniques for carrying out Discrete Fourier Transforms (DFTs) may instead be used in accordance with one or more other embodiments. The Doppler compensated signals are supplied as inputs to decoders 422, which are configured to output a correlation signal that has a peak when the echo signal was (most likely) encoded with a transmitter code that matches the correlator's associated transmitter code. As a result, the echo signal with matching transmitter code is decoded, and other signals (such as noise signals or signals encoded with a different transmitter code) are suppressed.

Sparse recovery 424 is configured to receive the output signals of decoders 422 and process those signals, according to the approaches described herein, to generate a set of sparse vectors **X,** such as by solving equation (3) using the approaches described herein. The output of sparse recovery 424 is processed to determine attributes, such as distance and DOA of objects in the vicinity of the radar system 400.

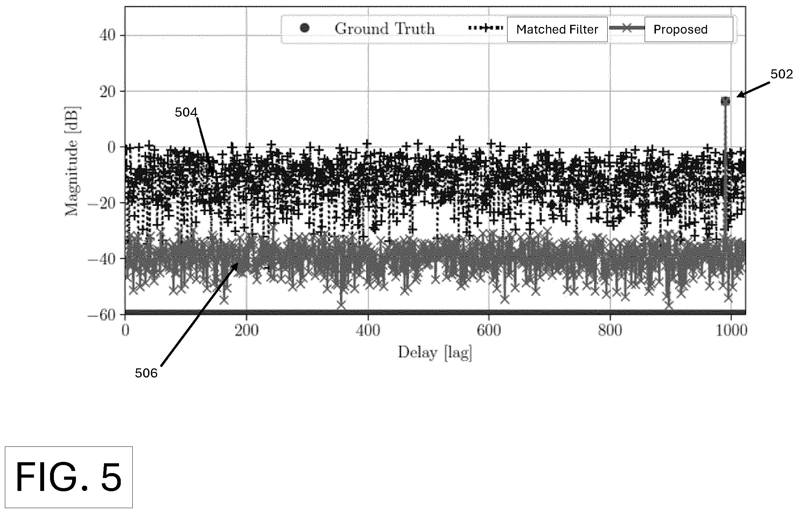

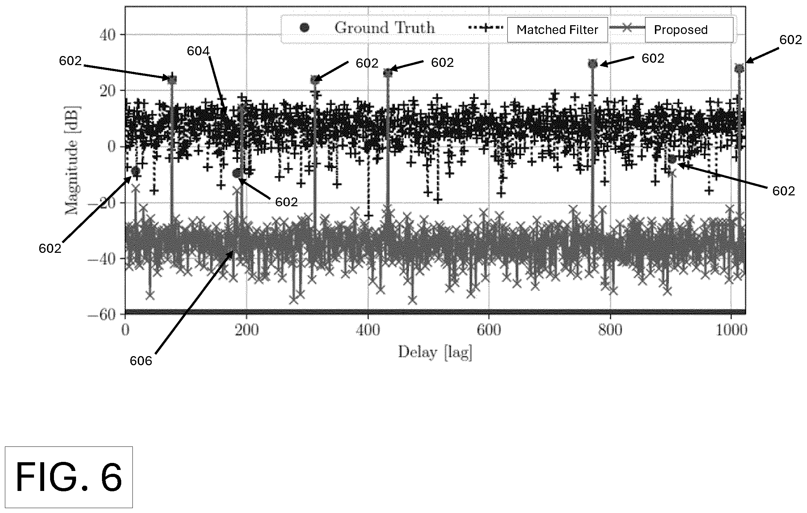

FIGS. 5 and 6 are charts depicting results of PMCW radar signal processing in accordance with conventional approaches and in accordance with the present disclosure. In FIGS. 5 and 6, example data was utilized for a radar system having a 4TX MIMO configuration. FIG. 5 is a chart (horizontal axis represents delay, which corresponds to distance of object, while the vertical axis represents signal magnitude) that shows the estimated magnitude and distance for radar signals processed in conjunction with a single ground truth object 502. As depicted, both conventional signal processing (reflected by trace 504) and the present signal processing approach (reflected by trace 506) have peaks at the location of and are able to detect ground truth object 502. However, as depicted by FIG. 5, the sidelobe level, induced by the codes' correlation properties, for trace 506 is significantly reduced compared to trace 504, which indicates that the present signal processing approach has significantly reduced the sidelobe level as compared to conventional approaches. Specifically, the conventional approach has larger estimation noise than the proposed method: around -10 dB for the classical method and -40 dB for the proposed method in this example. These sidelobes directly relate to the auto- and cross-correlation sidelobes, i.e., the PACF and PCCF and are analytically defined. In a similar manner, FIG. 6 demonstrates that both methods (i.e., conventional approach illustrate by trace 604 and the present approach illustrated by trace 606) have similar estimation capabilities with multiple ground truth objects 602. However, due to its larger estimation noise, which are caused by sidelobe properties of the codes, conventional approach suffers in the estimation performance when both weak and strong objects are present in the radar scene.

Embodiments described herein demonstrate an approach for modeling the MIMO PMCW signals into matrix form, and exploit sparsity in range distribution to formulate it as a sparse recovery problem. Meanwhile, two different unfolded networks may be utilized to solve the problem. Embodiments described herein may, compared to the matched filter method, improve the dynamic range and the precision of phase estimation. In addition, embodiments described herein may include analytical models that are adaptive to the changes of transmitted codes while still capable of maintaining performances that are comparable to conventional approaches that rely on full learnable matrices.

In some aspects, the techniques described herein relate to a radar system including: a plurality of transmitter modules configured to transmit radar signals; a plurality of receiver modules; and a controller configured to: encode a plurality of code division multiplexed radar signals using a predefined code dictionary that defines a plurality of transmitter codes, cause the plurality of transmitter modules to transmit the plurality of code division multiplexed radar signals as transmitted signals, receive, using the plurality of receiver modules, reflections of the transmitted signals reflected by at least one object to generate signals based on the received reflections as observed signals, wherein a sparse matrix defines a relationship between the plurality of transmitter codes and values of the observed signals; execute a sparse recovery method to determine the sparse matrix, which is associated with distance estimates based on the observed signals, using the predefined code dictionary and the observed signals, estimating an attribute of the at least one object using the sparse matrix, and transmitting the attribute of the at least one object to a vehicle driver assistance system.

In some aspects, the techniques described herein relate to a radar system, wherein the predefined code dictionary includes a code dictionary matrix configured as a circulant matrix wherein each column in the code dictionary matrix is a circularly shifted version of a first column of the code dictionary matrix.

In some aspects, the techniques described herein relate to a radar system, wherein the controller is configured to execute the sparse recovery method by implementing a least absolute shrinkage and selection operator (LASSO) regression.

In some aspects, the techniques described herein relate to a radar system, wherein the sparse recovery method includes at least one of an Iterative Shrinkage Thresholding Algorithm (ISTA), Approximate Message Passing (AMP) algorithm, and an Alternating Direction Method of Multipliers (ADMM).

In some aspects, the techniques described herein relate to a radar system, wherein the ISTA, FISTA, or ADMM algorithm are configured to execute a predetermined model to determine the sparse matrix, wherein the predetermined model is trained using unfolded versions of the at least one of the ISTA, FISTA, and ADMM algorithm.

In some aspects, the techniques described herein relate to a radar system, wherein the controller is further configured to execute Doppler processing and Doppler compensation before iteratively estimating the sparse matrix and before estimating the attribute of the at least one object.

In some aspects, the techniques described herein relate to a radar system, wherein the controller is configured to perform Doppler processing of the observed signals after iteratively estimating the sparse matrix.

In some aspects, the techniques described herein relate to a radar system, wherein the controller is configured to, in parallel, execute the sparse recovery method on signals received simultaneously from each of the receiver modules.

In some aspects, the techniques described herein relate to a system, including: a plurality of transmitter modules configured to transmit radar signals; a plurality of receiver modules; and a controller configured to: receive reflections of signals transmitted by the plurality of transmitter modules as observed signals; execute a sparse recovery method to determine a sparse matrix, wherein the sparse matrix is associated with distance estimates based on the observed signals, using a predefined code dictionary and the observed signals, and the sparse matrix defines a relationship between the plurality of transmitter codes and values of the observed signals; and estimating an attribute of at least one object using the sparse matrix.

In some aspects, the techniques described herein relate to a system, wherein the controller is configured to execute the sparse recovery method by implementing a least absolute shrinkage and selection operator (LASSO) regression.

In some aspects, the techniques described herein relate to a system, wherein the sparse recovery method includes at least one of an Iterative Shrinkage Thresholding Algorithm (ISTA), Approximate Message Passing (AMP) algorithm, and an Alternating Direction Method of Multipliers (ADMM).

In some aspects, the techniques described herein relate to a system, wherein the ISTA, FISTA, or ADMM algorithm are configured to execute a predetermined model to determine the sparse matrix, wherein the predetermined model is trained using unfolded versions of the at least one of the ISTA, FISTA, and ADMM algorithm.

In some aspects, the techniques described herein relate to a method, including: encoding a plurality of code division multiplexed radar signals using a predefined code dictionary that defines a plurality of transmitter codes, causing a plurality of transmitter modules to transmit the plurality of code division multiplexed radar signals as transmitted signals, receiving, using a plurality of receiver modules, reflections of the transmitted signals reflected by at least one object to generate signals based on the received reflections as observed signals, wherein a sparse matrix defines a relationship between the plurality of transmitter codes and values of the observed signals; executing a sparse recovery method to determine the sparse matrix, which is associated with distance estimates based on the observed signals, using the predefined code dictionary and the observed signals, estimating an attribute of the at least one object using the sparse matrix, and transmitting the attribute of the at least one object to a vehicle driver assistance system.

In some aspects, the techniques described herein relate to a method, further including determining the predefined code dictionary includes a code dictionary matrix configured as a circulant matrix wherein each column in the code dictionary matrix is a circularly shifted version of a first column of the code dictionary matrix.

In some aspects, the techniques described herein relate to a method, further including executing the sparse recovery method by implementing a least absolute shrinkage and selection operator (LASSO) regression.

In some aspects, the techniques described herein relate to a method, further including executing the sparse recovery method using at least one of an Iterative Shrinkage Thresholding Algorithm (ISTA), Approximate Message Passing (AMP) algorithm, and an Alternating Direction Method of Multipliers (ADMM).

In some aspects, the techniques described herein relate to a method, wherein the ISTA, FISTA, or ADMM algorithm are configured to execute a predetermined model to determine the sparse matrix, wherein the predetermined model is trained using unfolded versions of the at least one of the ISTA, FISTA, and ADMM algorithm.

In some aspects, the techniques described herein relate to a method, further including executing Doppler processing and Doppler compensation before iteratively estimating the sparse matrix and before estimating the attribute of the at least one object.

In some aspects, the techniques described herein relate to a method, further including performing Doppler processing of the observed signals after iteratively estimating the sparse matrix.

In some aspects, the techniques described herein relate to a method, further including, in parallel, executing the sparse recovery method on signals received simultaneously from each of the receiver modules.

Although the examples have been described with reference to automotive radar systems, the systems and methods described herein may be implemented in conjunction with other types of radar systems.

The preceding detailed description is merely illustrative in nature and is not intended to limit the embodiments of the subject matter or the application and uses of such embodiments.

As used herein, the word "exemplary" means "serving as an example, instance, or illustration." Any implementation described herein as exemplary is not necessarily to be construed as preferred or advantageous over other implementations. Furthermore, there is no intention to be bound by any expressed or implied theory presented in the preceding technical field, background, or detailed description.

The connecting lines shown in the various figures contained herein are intended to represent exemplary functional relationships and/or physical couplings between the various elements. It should be noted that many alternative or additional functional relationships or physical connections may be present in an embodiment of the subject matter. In addition, certain terminology may also be used herein for the purpose of reference only, and thus are not intended to be limiting, and the terms "first," "second" and other such numerical terms referring to structures do not imply a sequence or order unless clearly indicated by the context.

As used herein, a "node" means any internal or external reference point, connection point, junction, signal line, conductive element, or the like, at which a given signal, logic level, voltage, data pattern, current, or quantity is present. Furthermore, two or more nodes may be realized by one physical element (and two or more signals can be multiplexed, modulated, or otherwise distinguished even though received or output at a common node).

The foregoing description refers to elements or nodes or features being "connected" or "coupled" together. As used herein, unless expressly stated otherwise, "connected" means that one element is directly joined to (or directly communicates with) another element, and not necessarily mechanically. Likewise, unless expressly stated otherwise, "coupled" means that one element is directly or indirectly joined to (or directly or indirectly communicates with, electrically or otherwise) another element, and not necessarily mechanically. Thus, although the schematic shown in the figures depict one exemplary arrangement of elements, additional intervening elements, devices, features, or components may be present in an embodiment of the depicted subject matter.

While at least one exemplary embodiment has been presented in the foregoing detailed description, it should be appreciated that a vast number of variations exist. It should also be appreciated that the exemplary embodiment or embodiments described herein are not intended to limit the scope, applicability, or configuration of the claimed subject matter in any way. Rather, the foregoing detailed description will provide those skilled in the art with a convenient road map for implementing the described embodiment or embodiments. It should be understood that various changes can be made in the function and arrangement of elements without departing from the scope defined by the claims, which includes known equivalents and foreseeable equivalents at the time of filing this patent application.

**Claims**

1. A radar system comprising:

   a plurality of transmitter modules configured to transmit radar signals;
   a plurality of receiver modules; and
   a controller configured to:

      encode a plurality of code division multiplexed radar signals using a predefined code dictionary that defines a plurality of transmitter codes,
      cause the plurality of transmitter modules to transmit the plurality of code division multiplexed radar signals as transmitted signals,
      receive, using the plurality of receiver modules, reflections of the transmitted signals reflected by at least one object to generate signals based on the received reflections as observed signals, wherein a sparse matrix defines a relationship between the plurality of transmitter codes and values of the observed signals;
      execute a sparse recovery method to determine the sparse matrix, which is associated with distance estimates based on the observed signals, using the predefined code dictionary and the observed signals, estimating an attribute of the at least one object using the sparse matrix, and
      transmitting the attribute of the at least one object to a vehicle driver assistance system.

2. The radar system of claim 1, wherein the predefined code dictionary includes a code dictionary matrix configured as a circulant matrix wherein each column in the code dictionary matrix is a circularly shifted version of a first column of the code dictionary matrix.

3. The radar system of claim 1 or 2, wherein the controller is configured to execute the sparse recovery method by implementing a least absolute shrinkage and selection operator, LASSO, regression.

4. The radar system of any preceding claim, wherein the sparse recovery method includes at least one of an Iterative Shrinkage Thresholding Algorithm ,ISTA, Approximate Message Passing, AMP, algorithm, and an Alternating Direction Method of Multipliers, ADMM.

5. The radar system of claim 4, wherein the ISTA, FISTA, or ADMM algorithm are configured to execute a predetermined model to determine the sparse matrix, wherein the predetermined model is trained using unfolded versions of the at least one of the ISTA, FISTA, and ADMM algorithm.

6. The radar system of any preceding claim, wherein the controller is further configured to execute Doppler processing and Doppler compensation before iteratively estimating the sparse matrix and before estimating the attribute of the at least one object.

7. The radar system of any preceding claim, wherein the controller is configured to perform Doppler processing of the observed signals after iteratively estimating the sparse matrix.

8. The radar system of any preceding claim, wherein the controller is configured to, in parallel, execute the sparse recovery method on signals received simultaneously from each of the receiver modules.

9. A method, comprising:

encoding a plurality of code division multiplexed radar signals using a predefined code dictionary that defines a plurality of transmitter codes,
causing a plurality of transmitter modules to transmit the plurality of code division multiplexed radar signals as transmitted signals,
receiving, using a plurality of receiver modules, reflections of the transmitted signals reflected by at least one object to generate signals based on the received reflections as observed signals, wherein a sparse matrix defines a relationship between the plurality of transmitter codes and values of the observed signals;
executing a sparse recovery method to determine the sparse matrix, which is associated with distance estimates based on the observed signals, using the predefined code dictionary and the observed signals,
estimating an attribute of the at least one object using the sparse matrix, and
transmitting the attribute of the at least one object to a vehicle driver assistance system.

10. The method of claim 9, further comprising determining the predefined code dictionary includes a code dictionary matrix configured as a circulant matrix wherein each column in the code dictionary matrix is a circularly shifted version of a first column of the code dictionary matrix.

11. The method of claim 9 or 10, further comprising executing the sparse recovery method by implementing a least absolute shrinkage and selection operator (LASSO) regression.

12. The method of any of claims 9 to 11, further comprising executing the sparse recovery method using at least one of an Iterative Shrinkage Thresholding Algorithm (ISTA), Approximate Message Passing (AMP) algorithm, and an Alternating Direction Method of Multipliers (ADMM).

13. The method of claim 12, wherein the ISTA, FISTA, or ADMM algorithm are configured to execute a predetermined model to determine the sparse matrix, wherein the predetermined model is trained using unfolded versions of the at least one of the ISTA, FISTA, and ADMM algorithm.

14. The method of any of claims 9 to 13, further comprising executing Doppler processing and Doppler compensation before iteratively estimating the sparse matrix and before estimating the attribute of the at least one object.

15. The method of any of claims 9 to 14, further comprising performing Doppler processing of the observed signals after iteratively estimating the sparse matrix.

FIG. 1

FIG. 2

FIG. 3

FIG. 4

FIG. 5

**FIG. 6**

Europäisches
Patentamt

European
Patent Office

Office européen
des brevets

**EUROPEAN SEARCH REPORT**

**Application Number**

EP 25 15 8720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XING TAN ET AL: "Sparse Learning via Iterative Minimization With Application to MIMO Radar Imaging", IEEE TRANSACTIONS ON SIGNAL PROCESSING, IEEE, USA, vol. 59, no. 3, 1 March 2011 (2011-03-01), pages 1088-1101, XP011348324, ISSN: 1053-587X, DOI: 10.1109/TSP.2010.2096218 | 1,3,4,8, 9,11,12 | INV. G01S7/35 G01S13/32 G01S13/58 G01S13/931 ADD. G01S13/44 |
| Y | * page 1089, left-hand column, line 42 - right-hand column, line 10 * | 4,5,12, 13 | |
| A | * page 1089, right-hand column, line 26 - line 35 * * page 1090, right-hand column, line 1 - line 3 * * page 1090, right-hand column, line 39 - line 50 * * pages 1-4 * | 2,6,7, 10,14,15 | |
| | ----- | | |
| X | THOMAS STROHMER ET AL: "Paper;Accurate imaging of moving targets via random sensor arrays and Kerdock codes;Accurate imaging of moving targets via random sensor arrays and Kerdock codes", INVERSE PROBLEMS, INSTITUTE OF PHYSICS PUBLISHING, BRISTOL, GB, vol. 29, no. 8, 9 July 2013 (2013-07-09), page 85001, XP020248168, ISSN: 0266-5611, DOI: 10.1088/0266-5611/29/8/085001 | 1-3,8-11 | TECHNICAL FIELDS SEARCHED (IPC) G01S |
| Y | * page 6, line 4 - page 7, line 6 * * page 9, line 8 - line 15 * | 4,5,12, 13 | |
| A | * page 20, line 37 - line 41 * * figures 1-7 * | 6,7,14, 15 | |
| | ----- -/-- | | |

The present search report has been drawn up for all claims

| Place of search | Date of completion of the search | Examiner |
|---|---|---|
| Munich | 22 July 2025 | Köppe, Maro |

EPO FORM 1503 03.82 (P04C01)

page 1 of 2

**EUROPEAN SEARCH REPORT**

Application Number

EP 25 15 8720

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | PU WEI ET AL: "Optimization Guarantees for ISTA and ADMM Based Unfolded Networks", ICASSP 2022 - 2022 IEEE INTERNATIONAL CONFERENCE ON ACOUSTICS, SPEECH AND SIGNAL PROCESSING (ICASSP), IEEE, 23 May 2022 (2022-05-23), pages 8687-8691, XP034156924, DOI: 10.1109/ICASSP43922.2022.9746860 [retrieved on 2022-04-27] | 4,5,12, 13 | |
| A | * page 8688, left-hand column, line 3 - line 28 * | 1-3, 6-11,14, 15 | |

----- 

TECHNICAL FIELDS
SEARCHED      (IPC)

The present search report has been drawn up for all claims

| Place of search | Date of completion of the search | Examiner |
|---|---|---|
| Munich | 22 July 2025 | Köppe, Maro |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.......................................................................................

& : member of the same patent family, corresponding document

EPO FORM 1503 03.82 (P04C01)

page 2 of 2